# EUROPEAN PATENT SPECIFICATION

(11) **EP 0 440 696 B1**
(45) Date of publication and mention of the grant of the patent: **26.02.1997**
(21) Application number: 89911897.0
(22) Date of filing: 23.10.1989
(51) Int. Cl.: E06B 1/60, F16B 25/02

(54) **AN ADJUSTABLE FASTENER**
ANPASSBARE BEFESTIGUNGSVORRICHTUNG
FIXATION REGLABLE

(30) Priority: 26.10.1988 NO 884753
(43) Date of publication of application: 14.08.1991
(73) Proprietor: IGELA A/S, N-1601 Fredrikstad (NO)
(72) Inventor: EDVARDSEN, Terje, N-1601 Fredrikstad (NO)
(74) Representative: Reinhard - Skuhra - Weise & Partner
(86) International application number: NO8900110
(87) International publication number: WO9004695

(56) References cited:
- EP-A- 0 319 817
- SE-C- 0 188 650
- US-A- 1 238 636
- US-A- 2 764 053

## Description

The present invention relates to an adjustable fastener for joining two structural members, preferably consisting of a door or window sash and a surrounding stationary building structure, according to the preamble of claim 1.

It is known to use adjustable fastening means in connection with mounting sashes frames or the like in adapted openings in building structures of various kinds. Such adjustable fastening means are, inter alia disclosed in NO-PS No. 152 807 and No. 155 784, the inventor in the latter cases being the same as in the present patent application. In the mentioned patents the fastening means in principle consists of a hollow internally threaded holder member, which is mounted in an adapted through hole in a sash or a frame to be joined with a surrounding building structure, and on the side facing the building structure. Holder member is firmly locked in a desired position by the aid of an additional locking ring, or by holder member proper being provided with a locking member.

Fastening means according to known technology, furthermore, comprise a load transmitting member, which is threaded externally to be screwed into said holder member, and which comprises a head to sit in contact with the surrounding building structure. Load transmitting member also has a through hole which is completely or partly designed witha polygonal cross section, and which adjacent said head is provided with a stop member for the head of a screw which may be inserted from the other side of the sash into load transmitting member, thus, to be screwed into the building structure to secure the load transmitting member to said structure. When said screw is not tightened so as to lock load transmitting member firmly to the building structure, it is possible to rotate load transmitting member in one or the other direction by inserting a tool into the hole on the inside of the sash, and to engagement with the polygon hole of load transmitting member. In this manner the distance between sash and surrounding building structure may be adjusted. It will readily be understood that all four external sides of the sash or frame must be provided with at least one adjustable fastening means of the mentioned kind.

The above mentioned kind of fastener means is used in connection with sashes and frames of wooden material. As regards relatively heavy and large sashes, etc. the known fastening means, besides providing a flexible and adjustable connection, also provide a very strong connection. It would, obviously be advantageous, if manufacturers of doors and windows could deliver sashes and frames with mounted fasteners. Previously, this was, however, not the case, due to the fact that the fastening means project from respective sashes or frames, inter alia, with heads of the load transmitting members, which prevents efficient stapling for storage and transport. This, in turn, caused the adjustable fastening means to be mounted at the contractors', and commonly directly on the building site.

As regards most smaller and more lightweight sashes, frames, etc. of wooden materials, sufficient stability proved to be achieved when the load transmitting member is mounted directly in a pre-threaded hole in respective sash or frame, i.e. without use of a holder member which is preferably of metal. In this case the load transmitting member is properly constituted by an adjustable fastener.

US-A-1238636 discloses wood screws, in particular of the type, which is self-countersinking. This preknown screw has a conical formed flange, which exerts an axial force against the frame, and in these areas of the frame, the axial forces may urge the material outwardly and undesired cracks may occur. Disadvantageously, this screw, provided with a large head, might possibly not function, definitely not in hard wooden material, such as oak, mahogany etc. Further, when the head of the screw is screwed into the frame, there are no means for discharging and guiding away wooden chips.

A fastener without cutting edges is further known from SE-C-188650. Disadvantageously, it is necessary to drill a recess in advance into the frame, which is adapted to the head or platform of the fastener, which entails an additional drilling operation and increases the manufacturing and mounting costs, in particular, since additional expensive special tooling is needed. Further, it is not possible to mount this preknown fastener in frames without a through hole, since the fastener does not have the possibility of adjustment between the frame and the building structure. The head of the fastener is not adjustable.

It is an object of the present invention to provide an adjustable fastener according to the preamble of claim 1, which can easily be mounted to a structural member with no part thereof projecting therefrom without the need of predrilling a head recess.

According to the invention, this object was obtained by characterizing features of claim 1. Further advantageous embodiments are stated in subclaims 2 and 3.

Advantageously, when the adjustable fastener according to the invention is screwed into an adapted threaded hole, in a sash, frame, etc., it is screwed so far, that said head engages the surface of a sash or frame and said cutting edges through into the sash, frame, etc., so that the external vertical cutting edges will engage first and cut the surface to form a circular groove and afterwords, the radial cutting edges will engage and cut material inside said circular groove.

Advantageoulsy, to avoid that wooden chips which are cut off below the head of the fastener are forced out onto the side of the head, where wooden chips would tear and damage, in particular the edge of the drilled groove, the fastener head is provided with one or a number of radial recesses. In this manner cut off wooden material will automatically be discharged when the head is screwed into the sash, frame, etc.

An embodiment of the invention is discussed in more detail below, inter alia by the aid of drawings, in which
- Figure 1: shows a perspective view of the fastener as well as a screw, and
- Figure 2: shows the fastener and screw mounted for joining a door or window sash with a surrounding building structure.

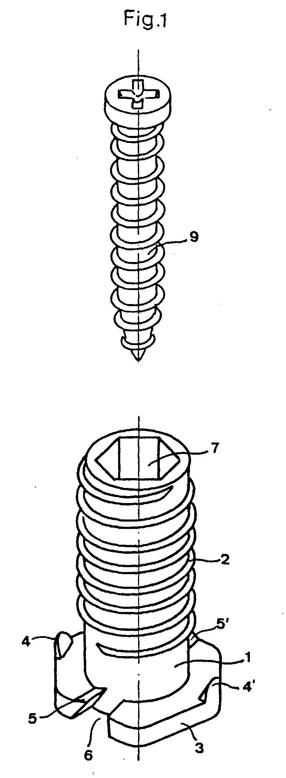

Figure 1 shows a screw 9 and a fastener 1 with a powerful self-cutting threaded stem 2. From the lower faces of a head 3 and from the external edge portion of the head 3 two diametrally opposed and vertical cutting edges 4,4' project. 5,5' designate opposite radial cutting edges which are slightly more shallow than cutting edges 4, 4'. 6 designates a radial recess in the head, and on the opposite side of the head (not shown) there is a corresponding recess. The head 3 of the fastener 1 is polygonally designed, and the same goes for the lower portion of a through hole 7 in the fastener 1.

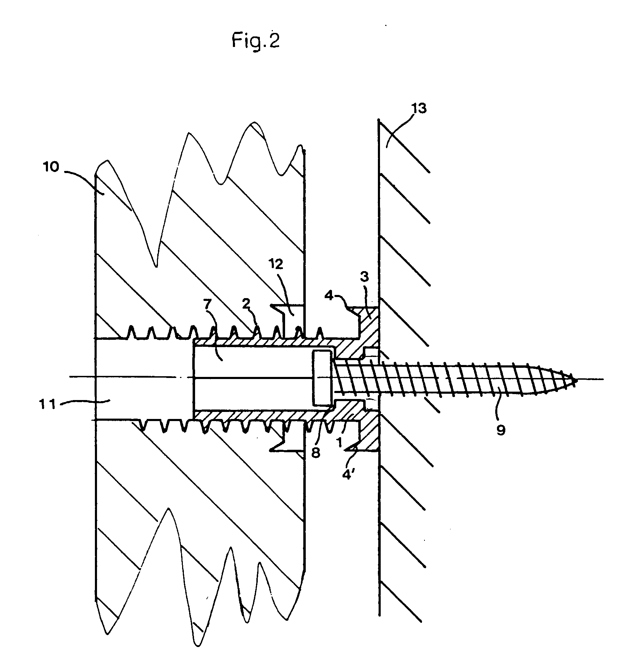

Figure 2 shows the fastener 1 in a finished mounted state. The fastener 1 is mounted in a through hole 11 in a sash structure 10, which is of a soft material, preferably wood. Originally, and during storage, transport, etc. the fastener head 3 was screwed into and, thus, recessed in a self-made groove 12 in the sash 10. From this recessed position the fastener 1 with its head 3 is screwed slightly out of the sash 10 during mounting, so that the head 3 contacts a stationary building structure 13. This adjustment of the fastener 1 is either achieved by insertion of a tool through hole 11 in the sash 10 for engagement with the polygonal head 7 of the fastener 1, or by the aid of a tool through a slot between the sash 10 and the building structure 13 for engagement with polygonal head 3 of the fastener 1. When the fastener 1 is adjusted, and has its head 3 in contact with building structure 13, the fastener 1 is firmly attached to the building structure 13 by the aid of screw 9, the head of which is made to contact a stop 8 in the hole 7 of the fastener 1.

## Claims

1. An adjustable fastener (1) for joining two structural members which preferably consist of a door or window sash (10) and a surrounding stationary building structure (13), said fastener (1) consisting of an externally threaded stem (2) and a head (3) of uniform thickness which is disc-formed and preferably polygonal, said fastener (1) being provided with a through hole (7) in its longitudinal direction, which is polygonal, at least in the lower portion of the stem (2), and which is provided with a stop (8) for a screw head or the like in the head portion, characterized in that the underside of the head (3) is provided with one or a number of vertical cutting edge(s) (4, 4') and one or a number of radial cutting edge(s) (5, 5'), the vertical cutting edges (4, 4') projecting further out than said radial cutting edges (5, 5'), the head (3) being further provided with one or a number of, preferably radial, recesses (6), which are provided before the radial cutting edges (5, 5'), seen in the direction of screwing in of the fastener (1).

2. A fastener according to claim 1, characterized in that the radial cutting edge (5, 5') is provided at the back surface of the recesses (6).

3. A fastener according to claim 1 or 2, characterized in that two or more vertical cutting edges (4, 4') are provided diametrally opposed and vertically on the external edge portion of head (3), respectively, and that two or more cutting edges (5, 5') are provided radially.

## Patentansprüche

1. Anpassbare Befestigungsvorrichtung (1) zum Verbinden zweier Strukturelemente, welche vorzugsweise aus einem Tür- oder Fensterflügel (10) und einer umgebenden stationären Gebäudestruktur (13) bestehen, wobei die Befestigungsvorrichtung (1) aus einem Schaft (2) mit einem Außengewinde und einem Kopf (3) einheitlicher Dicke, der scheibenförmig und vorzugsweise polygonal ist, besteht, wobei die Befestigungsvorrichtung (1) mit einem Durchgangsloch (7) in ihrer Längsrichtung versehen ist, das zumindest im unteren Bereich des Schaftes (2) polygonal ist und das mit einem Anschlag (8) für einen Schraubenkopf oder dergleichen im Kopfabschnitt versehen ist,
dadurch gekennzeichnet, daß
die Unterseite des Kopfes (3) mit einem vertikalen Schnittrand oder einer Anzahl vertikaler Schnittränder (4, 4') und einem radialen Schnittrand oder einer Anzahl radialer Schnittränder (5, 5') versehen ist, wobei die vertikalen Schnittränder (4, 4') weiter vorstehen als die radialen Schnittränder (5, 5'), wobei der Kopf (3) weiterhin mit einer oder einer Anzahl von vorzugsweise radialen Ausnehmungen (6) versehen ist, die gesehen in der Einschraubrichtung der Befestigungsvorrichtung (1) vor den radialen Schnitträndern (5, 5') vorgesehen sind.

2. Befestigungsvorrichtung nach Anspruch 1, dadurch gekennzeichnet, daß der radiale Schnittrand (5, 5') an der hinteren Oberfläche der Ausnehmungen (6) vorgesehen ist.

3. Befestigungsvorrichtung nach Anspruch 1 oder 2, dadurch gekennzeichnet, daß zwei oder mehr vertikale Schnittränder (4, 4') diametral gegenüberliegend und vertikal auf dem äußeren Randabschnitt des Kopfes (3) jeweils vorgesehen sind, unc daß zwei oder mehr Schnittränder (5, 5') radial vorgesehen sind.

## Revendications

1. Cheville ajustable (1) pour assembler deux éléments de structure qui consistent de préférence en un châssis (10) de fenêtre ou de porte et une structure (13) de construction fixe d'entourage, ladite cheville (1) consistant en une tige (2) filetée extérieurement et une tête (3) d'épaisseur uniforme qui est en forme de disque et de préférence polygonale, ladite cheville étant munie d'un trou (7) la traversant dans sa direction longitudinale, lequel est polygonal, au moins dans la partie inférieure de la tige (2), et présente une butée (8) pour une tête de vis ou analogue dans la partie formant tête,
caractérisée en ce que
la face inférieure de la tête (3) est munie d'un ou plusieurs ergot(s) (4, 4') coupant(s) vertical (verticaux) et d'un ou plusieurs ergot(s) (5, 5') coupant(s) radial (radiaux), les ergots coupants verticaux (4, 4') faisant saillie davantage que lesdits ergots coupants radiaux (5, 5'), la tête (3) étant de plus munie d'une ou plusieurs encoches (6) de préférence radiales, qui sont réalisées devant les ergots (5, 5') coupants radiaux, vu dans la direction de vissage dans la cheville (1).

2. Cheville selon la revendication 1, caractérisée en ce que les ergots (5, 5') coupants radiaux sont réalisés à la surface arrière des encoches (6).

3. Cheville selon la revendication 1 ou 2, caractérisée en ce qu'au moins deux ergots (4, 4') coupants verticaux sont disposés diamètralement opposés et verticalement sur la partie de bord externe de la tête (3), respectivement, et au moins deux ergots (5, 5') coupants sont réalisés radialement.
